# EUROPEAN PATENT SPECIFICATION

(11) **EP 3 531 640 B1**
(45) Date of publication and mention of the grant of the patent: **30.12.2020**
(21) Application number: 18865331.5
(22) Date of filing: 27.02.2018
(51) Int. Cl.: H04L 12/851, H04L 12/725, H04L 12/721, H04L 12/741

(54) **DATA STREAM GUIDING METHOD, SERVER, AND SYSTEM**
DATENSTROMFÜHRUNGSVERFAHREN, SERVER UND SYSTEM
SERVEUR, PROCÉDÉ DE GUIDAGE DE FLUX DE DONNÉES ET SYSTÈME

(30) Priority: 29.12.2017 CN 201711475317
(43) Date of publication of application: 28.08.2019
(73) Proprietor: Wangsu Science & Technology Co., Ltd., Xuhui District Shanghai 200030 (CN)
(72) Inventor: CHEN, Kailin, Shanghai 200030 (CN); LIU, Xiaopeng, Shanghai 200030 (CN)
(74) Representative: de Arpe Fernandez, Manuel
(86) International application number: PCT/CN2018/077429
(87) International publication number: WO 2019/127895

(56) References cited:
- EP-A1- 2 712 128
- CN-A- 101 184 000
- CN-A- 101 814 977
- CN-A- 103 297 270
- CN-A- 106 921 637
- CN-A- 107 147 588
- US-A1- 2012 020 361
- US-A1- 2016 205 012

## Description

### FIELD OF THE DISCLOSURE

The present disclosure relates to the technology for redirecting network traffic and, more particularly, to method, server, and system for data stream redirecting.

### BACKGROUND

As the importance of the Internet increases continuously and the structure of the network becomes increasingly complicated, the number of network users increases rapidly, and various new network applications, servers, standards and protocol layers emerge. To properly control the network, the network manager has to constantly learn the running status of the current network and master the conditions of various types of traffic in the network. Therefore, traffic recognition becomes essential. Approaches for traffic recognition currently applied domestically or internationally are mainly recognition based on deep packet inspection. That is, conventional traffic recognition is a technique that relies on deep packet inspection to detect data packets of the traffic, so that the specific application(s) that the traffic belongs to may be determined. The deep packet inspection (DPI) is a technique based on data packets, which performs deep inspection for different network application-layer loads, such as the hypertext transfer protocol (HTTP) and domain name system (DNS). It determines the validity of a packet by performing effective load inspection on the packet.

A data stream (or data traffic) refers to a data packet set including a series of data packets transmitted between destination address information and a source address. The current traffic recognition performs online dynamic recognition on the traffic in real time, and such traffic recognition approach often performs feature recognition on a first packet of the data stream and redirects the data stream after recognition. Once determined, the redirecting path of the data stream cannot be changed. For example, under situations in which the first packet cannot be recognized or the data stream has already been redirected to a certain path, even the application identity to which the data stream belongs is recognized based on subsequent packets, the path of the data stream can no longer be modified. As a result,not only the accuracy of data stream recognition is reduced, but also the accuracy in redirecting the data stream is affected.

To overcome aforementioned issues, another data stream recognition approach has been developed, which realizes data stream recognition by recognizing the destination address information of the data stream. Correspondingly, the process of redirecting the data stream includes: when a new data stream passes through a server, matching destination address information of the new data stream with stored correspondence relationships, and if the matching is successful, the data stream is redirected using a preset routing strategy that corresponds to an application identity in the matched correspondence relationship. The matched correspondence relationship herein may refer to the relationship between the destination address information of the data stream and the corresponding application identity.

Inventors found at least following issues in the existing technologies: though via the approach of recognizing the destination address information of the data stream, the problem that the first packet cannot be recognized is solved, yet when a server relies on the correspondence relationships obtained by itself statistically to redirect data streams, the statistic process can be very long and incomplete. Thus, the identity of the application to which the destination address information of the current data stream corresponds may not be determined rapidly and accurately, which causes the efficiency of redirecting the data stream to be relatively low. Reference is made to the documents US 2016/205012, US 2012/020361 and EP 2 712 128 which have been cited as relating to the state of the art.

### BRIEF SUMMARY OF THE DISCLOSURE

The objective of the present disclosure is to provide a data stream redirecting method, a server, and a system, such that the data stream can be recognized rapidly and accurately, and the efficiency of recognizing data traffic is improved. Thus, the rate and accuracy of traffic redirection may be improved.

To solve the aforementioned technical issues, embodiments of the present disclosure provide a data stream redirecting method, applicable to a service node. The method includes: redirecting a data stream based on a first global database, where the first global database includes at least one piece of destination address information and application identities corresponding to the at least one piece of destination address information; based on destination address information of data streams that traverse within a first preset period and application identities corresponding to the destination address information, determining variance information of the first global database, wherein the variance information of the first global database includes update information and incremental information, wherein the update information includes a matching record that includes the destination address information and a corresponding application identity, and the incremental information includes a result of feature recognition; uploading the variance information to a central node, such that the central node updates the first global database based on variance information uploaded by at least one service node, to generate a second global database; acquiring the second global database from the central node and, based on the second global database, redirecting the data stream.

Embodiments of the present disclosure further provide a method for redirecting a data stream, applicable to a central node. The method includes: receiving variance information of a first global database respectively uploaded by at least one service node, where the first global database includes multiple pieces of destination address information and application identities corresponding to the multiple pieces of destination address information, and the variance information of the first global database is determined by the at least one service node based on destination address information of data streams that traverse the service node within a first preset period and application identities corresponding to the destination address information, wherein the variance information includes update information and incremental information, wherein the update information includes a matching record that includes the destination address information and a corresponding application identity, and the incremental information includes a result of feature recognition;
processing the variance information uploaded by each service node, to obtain total variance information; based on the total variance information, updating the first global database to obtain a second global database and providing the second global database to the at least one service node to redirect data streams.

Embodiments of the present disclosure further provide a server, including: at least one processor, and a memory in communication connection with the at least one processor. The memory stores instructions executable by the at least one processor, and the instructions are executed by the at least one processor, such that the at least one processor can execute a data stream redirecting method applied to a service node.

Embodiments of the present disclosure further provide a server, including: at least one processor, and a memory in communication connection with the at least one processor. The memory stores instructions executable by the at least one processor, and the instructions are executed by the at least one processor, such that the at least one processor can execute a data stream redirecting method applied to a central node.

Embodiments of the present disclosure further provide a data stream redirecting system, including a central node and at least one service node. A service node is configured to execute a data stream redirecting method applied to the service node, and the central node is configured to execute a data stream redirecting method applied to the central node.

With respect to existing technologies, in embodiments of the present disclosure, service nodes may redirect a data stream based on a first global database. Due to the uncertainty of the data stream and the possibility that destination address information of the data stream and an application identity corresponding to the destination address information may expire or be updated, within a first preset period, each service node may count variance information and upload the variance information to a central node. The central node updates the first global
database based on the variance information uploaded by each service node. Because the central node receives variance information uploaded by a plurality of service nodes, the variance information of the first global database is enriched. Thus, the variance information of the first global database becomes more completed and detailed, and the second global database obtained by updating based on the variance information becomes more accurate and complete. In a new cycle, a service node may acquire the second global database from the central node, and redirect a data stream based on the second global database. Thus, the success degree of matching may be improved, the speed of a single service node in redirecting the data stream may be increased, and the efficiency of redirecting the data stream may be enhanced.

Further, the based on destination address information of data streams that traverse within a first preset period and application identities corresponding to the destination address information, determining variance information of the first global database, includes: determining whether destination address information of the data stream exists in the first global database; if the destination address information of the data stream exists in the first global database, recording a matching record that includes the destination address information and a corresponding application identity; and if the destination address information of the data stream does not exist in the first global database, performing, by the service node, feature recognition on the data stream, and recording a result of feature recognition. If the destination address information of the data stream exists in the first global database, recording the matching record that includes the destination address information and the corresponding application identity may enable the service node to acquire the application identity corresponding to the destination address, without performing feature recognition on the data stream. If the destination address information of the data stream does not exist in the first global database, performing feature recognition on the data stream and recording the result of feature recognition may enable the service node to perform subsequent processing based on the result of feature recognition.

Further, the variance information of the first global database may include: update information and incremental information. The aforementioned matching record that includes the destination address information and the corresponding application identity may be counted as the update information, and the result of feature recognition may be counted as the incremental information. Through the result of feature recognition, the destination address information of the data stream that does not exist in the first global database may be obtained, such that the result of feature recognition may be counted as the incremental information of the first global database. Accordingly, the incremental information of the first global database may be acquired accurately.

Further, the result of feature recognition may specifically include: the destination address information of the data stream, and an application identity obtained by the service node through feature recognition that corresponds to the destination address information; and destination address information of data streams to which application identities cannot be obtained through feature recognition correspond. By fully recording destination address information of data streams that are not stored in the first global database, the accuracy of the first global database may be enhanced.

Further, the redirecting a data stream based on a first global database may specifically include: parsing out destination address information from the data stream; determining whether the destination address information exists in the first global database, if the destination address information exists in the first global database, acquiring an application identity corresponding to the destination address information, and redirecting the data stream based on a preset routing strategy corresponding to the application identity, and if the destination address information does not exist in the first global database, performing feature recognition on the data stream, and redirecting the data stream based on a recognition result. That is, when redirecting the data stream based on the first global database, whether the destination address information exists in the first global database is determined. If the destination address information exists in the first global database, the application identity corresponding to the data stream may be acquired rapidly from the first global database, such that the data stream can be redirected based on the preset routing strategy of a corresponding application, without performing feature recognition. Thus, the rate of redirecting the data stream can be improved. If the destination address information does not exist in the first global database, feature recognition is performed on the data stream, and traffic is redirected based on a result of feature recognition. Thus, the situation in which a data stream cannot be redirected due to the fact that the first packet of the data stream cannot be recognized may be avoided.

Further, the destination address information may include one or more of destination IP addresses, destination port addresses, and transport layer protocols.

### BRIEF DESCRIPTION OF THE DRAWINGS

One or more embodiments are illustrated with reference to figures in the accompanying drawings, and the illustrations do not form limitations of the present disclosure. Components in the accompanying drawings having the same reference numerals represent same or similar components, and unless particularly stated, figures in the accompanying drawings do not form ratio limitations.
FIG. 1 illustrates a flowchart of a data stream redirecting method according to Embodiment 1 of the present disclosure;
FIG. 2 illustrates a flow chart illustrating redirecting of data stream based on a first global database in a data stream redirecting method according to Embodiment 2 of the present disclosure;
FIG. 3 illustrates a flowchart of a data stream redirecting method according to Embodiment 3 of the present disclosure;
FIG. 4 illustrates a flowchart of a data stream redirecting method according to Embodiment 4 of the present disclosure;

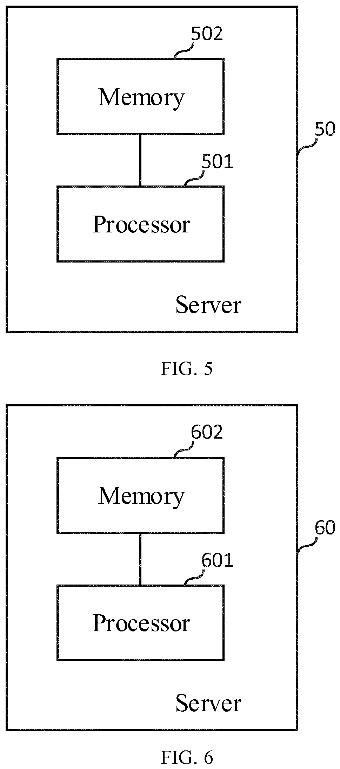

FIG. 5 illustrates a structural schematic view of a server according to Embodiment 5 of the present disclosure;
FIG. 6 illustrates a structural schematic view of a server according to Embodiment 6 of the present disclosure; and
FIG. 7 illustrates a structural schematic view of a data stream redirecting system according to Embodiment 7 of the present disclosure.

### DETAILED DESCRIPTION

To make the objective, technical solutions and advantages of the present disclosure clearer, embodiments of the present disclosure are described in more details with reference to the accompanying drawings. Obviously, the described embodiments are merely some embodiments of the present disclosure, but not entire embodiments. Based on embodiments of the present disclosure, all other embodiments obtainable by those ordinarily skilled in the relevant art without creative labor shall fall within the protection scope of the present disclosure.

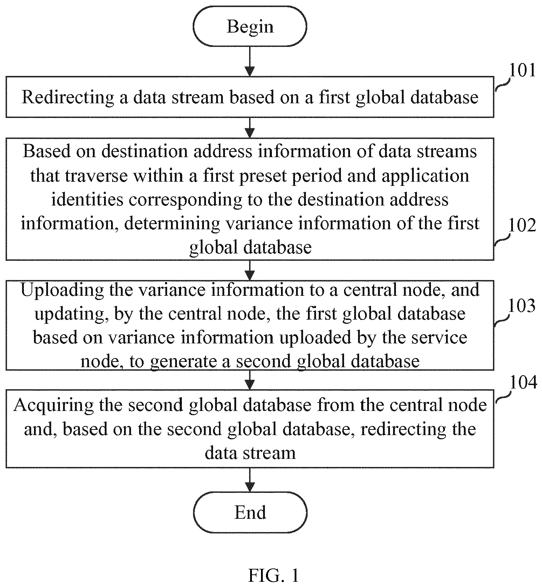

Embodiment 1 of the present disclosure relates to a data stream redirecting method, and the method is applicable to a service node. The service node may be a system serving end or a client, and the present disclosure is not intended to limit the type of the service node. The service node may be in communication connection with a central node, and based on the communication connection, data transmission may be realized between the service node and the central node. The number of the service nodes that the central node corresponds may be one or more. A specific process is illustrated in FIG. 1.

Step 101: redirecting a data stream based on a first global database, wherein the first global database includes at least one piece of destination address information and application identities corresponding to the at least one piece of destination address information.

Specifically, the service node acquires the first global database from the central node, and the first global database records destination address information and application identities corresponding to the destination address information, i.e., the first global database includes at least one piece of destination address information and application identities corresponding to the at least one piece of destination address information. The destination address information may include one or more of destination IP addresses, destination port addresses, and transport layer protocols. An application identity, also referred to as "an identity of an application", is configured to recognize information of the application, which may include a name of the application or other information that is configured to recognize the application.

The redirecting a data stream based on a first global database may specifically include acquiring a data stream that traverses the service node, parsing out destination address information from the data stream, matching the first global database based on the destination address information, and acquiring an identity (ID) of an application that sends the data stream. Thus, the data stream may be redirected based on a routing rule that the application identity corresponds. Obviously, approaches of redirecting a data stream based on the first global database are not limited to examples listed in the present disclosure, but may be other approaches for redirecting data streams.

Step 102: based on destination address information of data streams that traverse within a first preset period and application identities corresponding to the destination address information, determining variance information of the first global database.

For example, the first preset period may be determined based on a total number of data streams that traverse the service node and a flow rate of the data streams. The faster the flow rate, the shorter the first preset period and, the slower the flow rate, the longer the first preset period. For example, if the number of data streams that traverse the service node within 1 minute is 100, the first preset period may be configured to be 5 min. In other embodiments of the present disclosure, the first preset period may be a fixed period of time, and may be applied to various service nodes, respectively.

Further, a process of determining variance information of the first global database within the first preset period may include: determining whether destination address information of a data stream exists in the first global database. If the destination address information of the data stream exists in the first global database, a matching record that includes the destination address information of the data stream and a corresponding application identity is recorded. The matching record may include time information of a current matching operation. If the destination address information of the data stream does not exist in the first global database, the service node performs feature recognition on the data stream and records a result of feature recognition.

Specifically, the service node may obtain the application identity that the destination address information of the data stream corresponds, by recognizing feature information of the data stream that traverses the service node. An approximate process of performing, by the service node, feature recognition on the data stream may include: extracting quintuple information of the data stream, to acquire the destination address information of the data stream, e.g., the destination IP address. Optionally, based on needs, the destination port number and the transport layer protocol may also be acquired to form an information combination for the destination address information. The approximate process may further include: based on deep packet inspection (DPI) or other data packet inspection techniques, performing feature recognition on feature information of the data stream, to obtain a recognition result. The recognition result includes an identity of an application that sends the data stream obtained through recognition, or a conclusion that the application identity cannot be obtained through recognition.

The variance information of the first global database may include: update information and incremental information. The update information may include a matching record that includes destination address information and a corresponding application identity. The incremental information may include a result of feature recognition. The result of feature recognition may include: destination address information of a data stream, and an application identity obtained by the service node through feature recognition that corresponds to the destination address information; and destination address information of data streams to which application identities that cannot be obtained through feature recognition correspond.

It should be noted that, the confirmation of the service node towards the variance information is executed periodically. In one embodiment, given the first preset period as an updating period, the first global database used in a current updating period is obtained by applying the central node to update the global database used in a previous updating period based on variance information uploaded by all service nodes in the previous updating period. The global database used by the service node in the next updating period may be a second global database obtained by applying the central node to update the first global database based on the variance information uploaded by each service node in the current updating period. It should be noted that, in other embodiments, the length of the updating period may be another preset length of time, as long as the another preset period is longer than the first preset period.

Step 103: uploading the variance information to a central node, and updating, by the central node, the first global database based on variance information uploaded by the service node, to generate a second global database.

Specifically, when the service node uploads the variance information to the central node, the uploading period may correspond to the aforementioned updating period, or the service node may perform uploading based on another preset uploading period. The central node may update the first global database based on the variance information uploaded by at least one service node, where the at least one service node includes all service nodes coupled to the central node. In other words, from the perspective view of the central node, all service nodes coupled to the central node may respectively upload collected variance information, such that subsequent analysis and statistics can be performed.

Because the variance information uploaded by different service nodes may be duplicated or have conflict, the central node may receive and summarize the variance information uploaded by each service node to the first global database, and the summarized variance information may undergo a conflict resolution process to obtain the total variance information. There may be various conflict resolution processes. For example, by configuring priority of the application identities, based on the order of the priority, the application identity with the highest priority may be retained. Or, based on the order of variance information of the first global database received by the central node, the variance information having conflict may be removed. Based on the total variance information, the central node may update the first global database to generate the second global database. The specific approach that the central node processes the variance information may be illustrated in detail hereinafter.

Step 104: acquiring the second global database from the central node and, based on the second global database, redirecting the data stream.

For example, the service node may download the second global database from the central node, and redirect the data stream based on the second global database. The redirecting approach is similar to that at Step 101. Because the destination address information recorded in the second global database and a corresponding application identity are obtained by updating the variance information of the first global database uploaded by at least one service node, the records in the second global database obtained by the service node may be more complete and richer.

With respect to existing technologies, in embodiments of the present disclosure, a service node may redirect a data stream based on a first global database. Due to the uncertainty of the data stream and the possibility that destination address information of the data stream and an application identity corresponding to the destination address information may expire or be updated, within a first preset period, each service node may count variance information and upload the variance information to a central node. The central node updates the first global database based on the variance information uploaded by each service node. Because the central node receives variance information uploaded by a plurality of service nodes, the variance information of the first global database is enriched. Thus, the variance information of the first global database becomes more completed and detailed, and the second global database obtained by updating based on the variance information becomes more accurate and complete. In a new period, a service node acquires the second global database from the central node, and redirects the data stream based on the second global database. Thus, the success degree of matching is improved, the rate of a single service node in redirecting the data stream is increased, and the efficiency of redirecting the data stream may be enhanced.

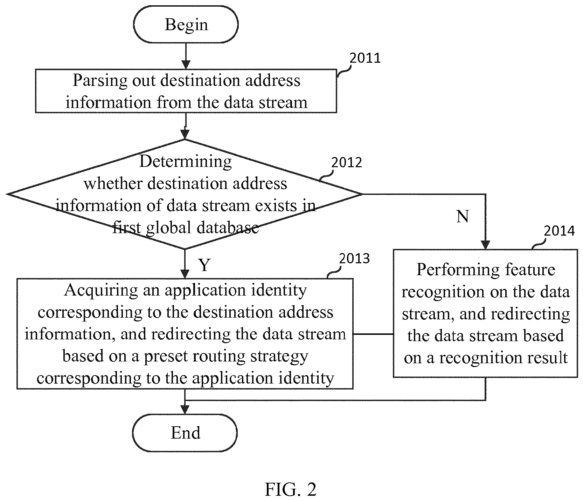

Embodiment 2 of the present disclosure relates to a data stream redirecting method, which is based on Embodiment 1. Specifically, Embodiment 2 improves a method of redirecting, by a service node, a data stream based on a global database. It should be noted that, the aforementioned first global database and the second global database are to differentiate global repositories used in different periods, and no matter whether it is the first global database or the second global database, the methods of redirecting, by a service node, a data stream are similar to each other. In one embodiment, given the first global database as an example, the specific process in FIG. 2 is illustrated in detail, and the method includes following steps.

Step 2011: parsing out destination address information from the data stream.

For example, the service node may capture a packet of the traversed data stream, parse the data in the captured packet (e.g., parse a first packet length, source address, destination address and version number of the data stream), and acquire the destination address information of the data stream. The destination address information may include one or more of a destination IP address, a destination port address, and a transport layer protocol. In one embodiment, the destination address information is a combination of a destination IP address, a destination port address, and a transport layer protocol. The destination address information including the destination IP address, the destination port address, and the transport layer protocol may more accurately locate the data. The present disclosure is not intended to limit the specific content included in the destination address, and the destination address information including one or more of a destination IP address information, a destination port address, and a transport layer protocol is given as examples in some embodiments for illustrative purposes. Obviously, the approach of parsing out destination address information from the data stream may be other parsing manners, which are not specifically listed herein.

Step 2012: determining whether destination address information of the data stream exists in the first global database. If destination address information of the data stream exists in the first global database, Step 2013 is executed, and if the destination address information of the data stream does not exist in the first global database, Step 2014 is executed.

For example, the first global database may store destination address information and corresponding application identities. To determine whether destination address information of the data stream exists in the first global database, in one example, each piece of destination address information in the first global database is traversed to query whether a piece of parsed out destination address information exists. Obviously, there are also other determination approaches, and the traversing approach described herein is for illustrative purposes.

Step 2013: acquiring an application identity corresponding to the destination address information, and redirecting the data stream based on a preset routing strategy corresponding to the application identity.

For example, based on Step 2012, it may be determined that the destination address information of the data stream exists in the first global database, and based on the matched destination address information, the application identity corresponding to the destination address information may be acquired re-directly. A preset routing strategy for each application identity in the first global database may be pre-configured at a service node, and when a service node acquires the identity of the application that sends the data stream, the data stream may be redirected base on the preset routing strategy that the application corresponds. Accordingly, different routing strategies may be configured for different applications, corresponding traffic redirecting services may be provided, and the configuration of the specific routing strategies may be set based on practical needs. The present disclosure is not limited thereto.

Step 2014: performing feature recognition on the data stream, and redirecting the data stream based on a recognition result.

For example, if through Step 2012, it is determined that the destination address information of the data stream does not exist in the first global database, the service node may perform feature recognition on the data stream based on DPI or other data packet inspection techniques, thereby acquiring the recognition result. If the feature recognition on the data stream is successful, the application identity to which the data stream corresponds may be acquired, such that the data stream can be redirected based on the preset routing strategy that the application identity corresponds. If the feature recognition on the data stream fails, it is indicated that the data stream cannot be recognized, and the data stream may be redirected based on a default preset routing strategy.

In the disclosed data stream redirecting method, when the data stream is redirected based on the first global database, whether destination address information of the data stream exists in the first global database may be first determined. If the destination address information exists in the first global database, the application identity corresponding to the data stream may be acquired rapidly from the first global database, such that the data stream can be redirected redirectly based on the preset routing strategy of the corresponding application. Thus,feature recognition is no longer needed, and the redirecting rate of the data stream may be improved. If the destination address information does not exist in the first global database, feature recognition is performed on the data stream, and traffic is redirected based on a result of feature recognition. Thus, the situation in which a data stream cannot be redirected due to the fact that the content in the first global database is incomplete may be avoided, which enhances the accuracy in redirecting the data stream. Further, because data streams are divided into two types, different redirecting approaches may be applied, which improves the rate and accuracy in redirecting data streams.

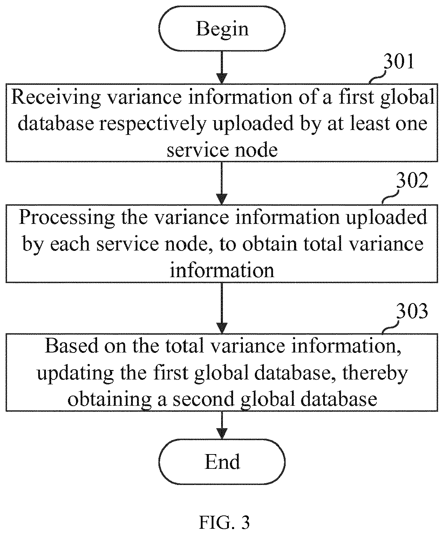

Embodiment 3 of the present disclosure provide a data stream redirecting method, and the method may be applied to a central node. In one embodiment, given an example in which one central node corresponds to a plurality of service nodes, the specific process may be shown in FIG. 3, including:
Step 301: receiving variance information of a first global database respectively uploaded by at least one service node, where the first global database includes multiple pieces of destination address information and application identities corresponding to the multiple pieces of destination address information.

For example, in one embodiment, a central node may be coupled to a plurality of service nodes, and the central node may receive variance information of the first global database uploaded by each service node. The first global database may include multiple pieces of destination address information and corresponding application identities. Thus, in the first global database, through a piece of destination address information, a corresponding application identity may be found. Further, the specific approach of using each service node to acquire the variance information may refer to embodiments shown in FIG. 1, which is not repeated herein.

Step 302: processing the variance information uploaded by each service node, to obtain total variance information.

As described in embodiments associated with FIG. 1, the variance information uploaded by a service node may include incremental information, where the incremental information includes destination address information of a data stream that does not match any record in the first global database via the service node, destination address information obtained through feature recognition and the corresponding application identity, and destination address information to which an application identity that cannot be obtained through feature recognition corresponds. Because the central node receives the incremental information uploaded by different service nodes, there may be portions that are duplicated or have conflict. Thus, in some embodiments, processing the variance information may include performing a conflict resolution process on the incremental information uploaded by each service node.

For example, the conflict resolution process primarily includes re-duplication, conflict processing and adding. The re-duplication includes: confirming and cleaning records, in the incremental information uploaded by each service node, that show the same destination address information and the same corresponding application identity, and saving one copy of the records to prevent duplicated records. The conflict processing step includes: processing records, in the incremental information uploaded by each service node, that show the same destination address but different application identities, to unify the records. The adding step includes: parsing and analyzing the destination address information corresponding to the application identities that cannot be acquired through feature recognition in the incremental information uploaded by each service node, thereby acquiring the corresponding application identity.

The present disclosure provides two approaches of conflict processing as examples. Obviously, the approach of conflict processing is not limited to the approach disclosed herein, but may be other conflict processing approaches.

The first conflict processing approach includes: configuring priority for application identities that correspond to the same destination address information, and applying an application identity with a high priority as the application identity to which the destination address information corresponds, among the conflict information. For example, assume there are an application identity A, an application identity B, and an application identity C. The priority of the application identity A may be 3, the priority of the application identity B may be 1, and the priority of the application identity C may be 2. The order of the priority is: the priority of 3 is higher than that of 2, and the priority of 2 is higher than that of 1. When performing conflict processing, based on the configured priority, and the record of an application identity with high priority may be retained. Through the priority of the application identities, the records including the destination address information and the corresponding applications that have conflict may be rapidly removed. It should be noted that, the priority of the corresponding application identities may be adjusted based on practical demands.

For example, assume the priority of the application identity a is 3, the priority of the application identitybis2, and the priority of the application identitycis1. The order of the priority from the highest to the lowest may be: 3, 2, 1. If in the incremental information uploaded by each service node, it is found that destination address information 1 corresponds to the application identity a, the destination address information 1 corresponds to the application identity b, and the destination address information 1 corresponds to the application identity c, the central node may perform a conflict resolution process, to acquire the priority of application identities in the three correspondence relationships. The record of the application identity having high priority may be retained, i.e., the record including the destination address information 1 and the corresponding application identity a. That is, the record including the destination address information 1 and the corresponding application identity a is retained, while the record including the destination address information 1 and the corresponding application identity b and the record including the destination address information 1 and the corresponding application identity are deleted.

Further, the priority configured for the application identities that the destination address information corresponds may be set based on the feature dimension of the corresponding applications. That is, applications represented by application identities to which the destination address information corresponds may have a corresponding feature dimension (e.g., sensitivity), and the feature dimension may be manually configured. A feature dimension may be selected as the standard to resolve conflict, and the feature dimension value of each application identity may be acquired. Based on the acquired feature dimension value, the priority corresponding to each application identity may be determined, and the application identity with the highest priority may be retained. For example, the application identity A may have a sensitivity value of 3, the application identity B may have a sensitivity value of 2, and the application identity C may have a sensitivity value of 1. Further, a higher sensitivity value may correspond to higher priority, and the order of the priority is: the priority of 3 is higher than that of 2, and the priority of 2 is higher than that of 1. If the same destination address information corresponds to different application identities, the feature dimension values of different application identities to which the destination address information corresponds may be acquired. Based on the order of priority of each feature dimension value, an application identity to which the destination address information corresponds to may be selected.

The second conflict processing approach includes: determining, based on time stamps of the records that include the destination address information and the corresponding application identities, a desired application identity. For example, the time stamp of the record that includes destination address information 1 and a corresponding application identity a may be T1, the time stamp of the record that includes the destination address information 1 and a corresponding application identity b may be T2, and the time stamp of the record of the destination address information 1 and a corresponding application identity c may be T3, where T3 is the latest time stamp. Under this situation, the central node may eventually retain the destination address information 1 and the corresponding application identity c.

The adding step may specifically include: querying and recording, by the central node, an application identity corresponding to the destination address information.

For example, the incremental information may record destination address information of data streams received by the service node within the first preset period is not included in the first global database and the destination address information of application identities that cannot be obtained through feature recognition. Such incremental information may be uploaded to the central node, and the central node acquires the destination address information from the incremental information. Further, the central node may obtain an application identity that the destination address information corresponds through an active querying approach. The active querying approach may be any approach listed below and, obviously, the active querying approach is not limited to the approaches listed below.

In the first querying approach: the central node sends a DNS request to a DNS server, acquires address information (e.g., an IP address) corresponding to a preset domain name, and compares whether the acquired address information is the same as the destination address information. If the acquired address information is the same as the destination address information, the domain name of the destination address information may be determined to be the preset domain name, and based on the preset domain name, an application identity corresponding to the preset domain name may be found. Thus, the destination address information and the corresponding application identity may be determined.

For example, the destination address information in the incremental information may be "119.75.213.61", the preset domain name may be www.aa.com, and the application identity corresponding to the preset domain name may be "AA". When the IP address corresponding to the preset domain name that is queried from the DNS server is "119.75.213.61", it is determined that the IP address corresponding to the preset domain name is the same as the destination address information. Accordingly, the application identity "AA" that the preset domain name corresponds is determined as the application identity that the destination address information corresponds.

In the second querying approach: the central node sends an HTTP request based on a specified Uniform Resource Locator (URL), parses the acquired returning result, and acquires an application identity that the destination address information corresponds.

In the third querying approach: a querying request is sent to a preset server, and based on a querying result returned by the preset server, the application identity that the destination address information corresponds may be determined. For example, information may be captured in the returning result, such that the application identity is acquired.

Through the aforementioned re-duplication, conflict processing and adding steps, the central node may fulfill the conflict resolution process on the incremental information uploaded by each service node, thereby obtaining the total variance information.

Step 303: based on the total variance information, updating the first global database, thereby obtaining a second global database.

In one possible embodiment, the total variance information is redirectly added to the first global database.

In one embodiment, the central node receives the variance information of the first global database updated by at least one service nodes, and updates the first global database based on the variance information, to obtain the second global database. Because the central node acquires multiple pieces of variance information of the first global repositories through a plurality of service nodes, the variance information of the first global database acquired by the central node is enriched. Thus, the data of the second global database obtained based on the variance information of the first global database is more accurate. Further, the first global database includes the incremental information, and the incremental information includes correspondence relationships counted by the service node within the first preset period that are not included in the first global database. Because at least one service node uploads the incremental information, the incremental information acquired by the central node may have conflicted correspondence relationships. Thus, through the conflict processing, the conflicted correspondence relationships may be removed from the uploaded incremental information, thus enabling the records of the destination address information and the corresponding applications, obtained by the central node through summarizing the uploaded incremental information,to be more accurate. Further, because the central node acquires, through an active querying approach, the application identity corresponding to the destination address information that cannot be recognized in the incremental information, the records of destination address information and corresponding application identities in the second global database may be enriched. Thus, the redirecting rate of the data stream may be further improved.

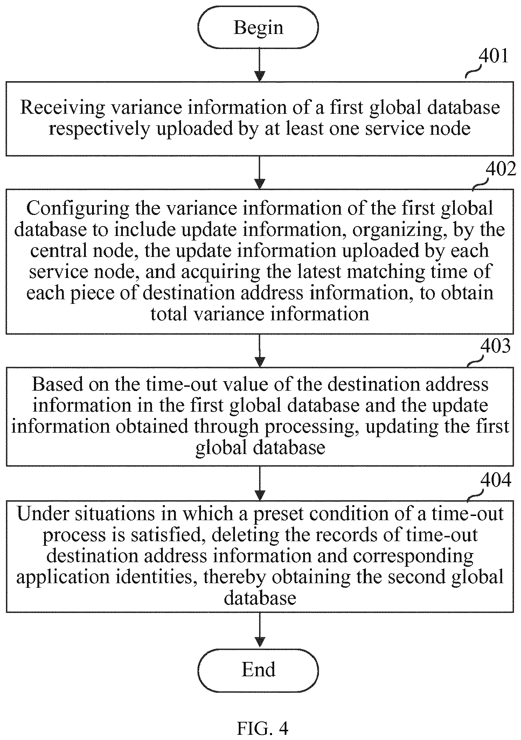

Embodiment 4 of the present disclosure relates to a data stream redirecting method. In one implementation, the variance information of the first global database includes update information, and the update information includes a latest matching time of the destination address information and the corresponding application identity obtained through matching based on the first global database within the first preset period. Each piece of destination address information in the first global database may be configured with a time-out value, and the updating process is shown in FIG. 4.

Step 401: receiving variance information of a first global database respectively uploaded by at least one service node, where the first global database includes multiple pieces of destination address information and application identities corresponding to the multiple pieces of destination address information.

Step 402: configuring the variance information of the first global database to include update information, organizing, by the central node, the update information uploaded by each service node, and acquiring the latest matching time of each piece of destination address information, to obtain total variance information.

For example, the central node receives the update information uploaded by the service node, queries the matching time that the destination address information corresponds in the update information, and treats the matching time obtained through querying as the latest matching time of the destination address information.

Step 403: based on the time-out value of the destination address information in the first global database and the update information obtained through processing, updating the first global database.

In implementation, the time-out value of the destination address information may be configured to indicate an effective period of a correspondence relationship between the destination address information and a corresponding application identity. The time-out value may be a designated date with a minimum unit of hour, for example, the time-out value of the destination address information 1 may be configured to be 10 am on October 30, 2017. After receiving the update information, the central node may organize to acquire the latest matching time that each piece of destination address information corresponds. Based on the time-out values of pieces of destination address information in the first global database and the latest matching time of each piece of destination address information obtained through processing, the central node updates the time-out values of the pieces of destination address information in the first global database to the latest matching time. For example, assume the update information includes destination address information 2 and corresponding matching time "10 am on October 20, 2017"; while the first global database includes two pieces of destination address information2, in which the time-out value of the destination address information 2is 5 am on October 17, 2017. Thus, the central node may receive the update information at 5 am on October 17, 2017, obtain the latest matching time of the destination address information 2, and update the time-out value of the destination address information 2 in the first global database to the latest matching time in the update information. That is, the time-out value of the destination address information 2 in the first global database is updated to "10 am on October 17, 2017".

It should be noted that, this step may update the time-out values of multiple pieces of destination address information in the first global database.

Step 404: under situations in which a preset condition of a time-out process is satisfied, deleting the records of time-out destination address information and corresponding application identities, thereby obtaining the second global database.

For example, the preset condition of the time-out process may be a fixed period, e.g., a period of the time-out process may be 20 hours. The first global database may be traversed to acquire the time-out value for each piece of destination address information in the first global database, and whether the acquired time-out value is smaller (i.e., "older") than a current time value may be acquired. If the acquired time-out value is smaller than a current time value, the record that includes the time-out destination address information and the corresponding application identity is deleted. If the acquired time-out value is not smaller than a current time value, no further processing is performed on the acquired destination address information. A specific example is given below for illustrative purposes.

For example, the preset condition of the time-out process may be configured to be "exceeding 24 hours", and the preset condition of the time-out process is satisfied every day at 5 am. Correspondingly, the central node performs the time-out process on the first global database at 5 am every day. If the first global database records the destination address information 1 and a corresponding application program D, and records the destination address information 2 and a corresponding application program F, where the time-out value of the destination address information 1 is 10 am on October 17, 2017, and the time-out value of the destination address information 2 is 10 am on October 20, 2017. Then, at 5 am on October 18, 2017, the central node begins to traverse the first global database, and determines whether the time-out value of the destination address information 1 is smaller than the current time value and whether the time-out value of the destination address information 2 is smaller than the current time value. Because the time-out value of the destination address information 1 is smaller than the current time value, the record of the destination address information 1 and the corresponding application program D is deleted, while the record of the destination address information 2 and the corresponding application program F is retained.

It should be noted that, the formats of the time-out values are not limited to that listed in the present disclosure, and there are other formats, which are not listed herein.

Further, it is worth noticing that, the variance information of the first global database may further include incremental information and update information. After receiving the incremental information and update information, the conflict processing may be performed, and after the conflict processing, the time-out process may be performed. Based on the conflict processing result and the time-out result, the first global database may be updated to obtain the second global database. Optionally, after receiving the incremental information and update information, the central node may first perform the time-out process, and then perform the conflict processing, and based on the conflict processing result and the time-out result, the first global database may be updated to obtain the second global database. That is, in the present disclosure, the order of the conflict processing and the time-out process is not limited.

In some embodiments of the data stream redirecting method, the variance information of the first global database includes update information, and the update information includes the destination address information and the corresponding matching time. The central node acquires the latest matching time of each piece of destination address information. Based on the latest matching time of the destination address information in the update information and the time-out value of the destination address information in the first global database, the central node updates the time-out value of the destination address information in the first global database. Further, when the preset condition of the time-out process is satisfied, based on the updated time-out value, the records that include the time-out destination address information and the corresponding application identities may be deleted. Because the time-out records are deleted periodically, the accuracy of the correspondence relationships summarized by the central node may be ensured, such that the accuracy of the global database acquired by the service node is ensured. Accordingly, the accuracy in redirecting the data stream is improved.

The division of steps in various aforementioned methods are for illustrative purposes, and during implementation, the steps may be combined into one step or certain steps may be divided into a plurality of sub-steps. As long as containing the same logic relationship, such divisions shall all fall within the protection scope of the present disclosure. Without departing from the spirit of the algorithm or process, non-essential modifications or introduction of non-essential designs into the algorithm or process shall all fall within the protection scope of the present disclosure.

Embodiment 5 of the present disclosure provides a server 50, including at least one processor 501, and a memory 502 in communication connection with the at least one processor 501. The memory 502 stores instructions executable by the at least one processor 501, and the instructions are executed by the at least one processor 501, such that the at least one processor 501 can execute aforementioned data stream redirecting methods applied to a service node.

For example, the memory 502 and the processor 501 may be connected via a bus, and the bus may include any number of coupled buses and bridges. The bus may connect various circuits of the one or more processors 501 and the memory 502. The bus may further connect various other circuits such as peripheral devices, voltage regulators, and power management circuits. This is known to those ordinarily skilled in the art, such that this paper does not provide detailed descriptions herein. The bus interface may provide an interface between the bus and a transceiver. The transceiver may be a component or a plurality of components, e.g., a plurality of receivers and senders, thereby providing components at the transmission medium that communicate with other devices. The data processed by the processor transmits at the antenna medium via an antenna and further, the antenna may receive data and transmit the data to the processor.

The processor 501 is responsible for management of the bus and ordinary processing, and may provide various functions, including: timing, peripheral interface, voltage adjustment, power management, and other control functions. The memory 502 may be configured to store data used by the processor 501 when executing operations.

Embodiment 6 of the present disclosure provides a server 60, including at least one processor 601, and a memory 602 in communication connection with the at least one processor 601. The memory 602 stores instructions executable by the at least one processor 601, and the instructions are executed by the at least one processor 601, such that the at least one processor 601 can execute the aforementioned data stream redirecting method applied to a central node.

For example, the memory 602 and the processor 601 may be connected via a bus, and the bus may include any number of coupled buses and bridges. The bus may connect various circuits of the one or more processors 601 and the memory 602. The bus may further include various other circuits such as peripheral devices, voltage regulators, and power management circuits. This is known to those ordinarily skilled in the art and, this paper thus does not provide detailed descriptions herein. The bus interface may provide an interface between the bus and a transceiver. The transceiver may be a component or a plurality of components, e.g., a plurality of receivers and senders, thereby providing components at the transmission medium that communicate with other devices. The data processed by the processor transmits at the antenna medium via an antenna and further, the antenna may receive data and transmit the data to the processor.

The processor 601 is responsible for management of the bus and ordinary processing, and may provide various functions, including: timing, peripheral interface, voltage adjustment, power management, and other control functions. The memory 602 may be configured to store data used by the processor 601 when executing operations.

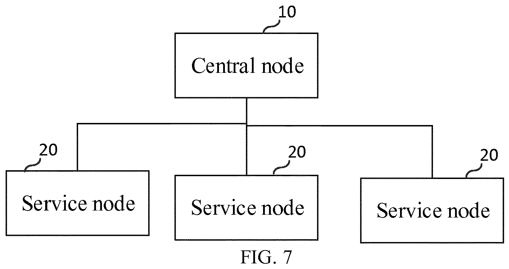

Embodiment 7 of the present disclosure provide a data stream redirecting system, include a central node 10 and at least one service node 20. A service node 10 is configured to execute a data stream redirecting method according to Embodiment 1 or Embodiment 2, and the central node is configured to execute a data stream redirecting method according to Embodiment 3 or Embodiment 4. For example, the number of service nodes may be 2 or 3. In one embodiment, three service nodes are applied for illustrative purposes, which is illustrated in FIG. 7.

Embodiment 8 of the present disclosure provide a computer-readable storage medium, storing computer programs. When being executed by the processor, the computer programs may realize any data stream redirecting method according to Embodiment 1∼ Embodiment 4.

Those ordinarily skilled in the relevant art shall understand that all or partial steps in the aforementioned method embodiments are implemented by using programs to instruct related hardware. The programs may be stored in a storage medium and include a plurality of instructions to enable one device (e.g., a single-chip micro-computer or a chip) or a processor to execute all or partial steps in the methods according to the present disclosure. The aforementioned storage medium may include various media that store program codes, such as U disc, mobile hard drive, read-only memory (ROM), random-access memory (RAM), magnetic disc, and optical disc.

## Claims

1. A data stream redirecting method, applicable to at least one service node, comprising:
Redirecting (S101) data streams based on a first global database, wherein the first global database includes at least one piece of destination address information and application identities corresponding to the at least one piece of destination address information;
based on destination address information of data streams that traverse the service node within a first preset period and application identities corresponding to the destination address information, determining (S102) variance information of the first global database, wherein the variance information of the first global database includes update information and incremental information, wherein the update information includes a matching record that includes the destination address information and a corresponding application identity, and the incremental information includes a result of feature recognition;
uploading (S103) the variance information to a central node, such that the central node updates the first global database based on variance information uploaded by the at least one service node, to generate a second global database; and
acquiring the second global database from the central node and, based on the second global database, redirecting data streams.

2. The data stream redirecting method according to claim 1, wherein based on the destination address information of the data streams that traverse within the first preset period and the application identities corresponding to the destination address information, determining the variance information of the first global database comprises:
determining whether the destination address information of a data stream exists in the first global database;
if the destination address information of the data stream exists in the first global database, recording a matching record that includes the destination address information and the corresponding application identity; and
if the destination address information of the data stream does not exist in the first global database, performing, by the service node, feature recognition on the data stream, and recording, by the service node, the result of feature recognition.

3. The data stream redirecting method according to claim 2, wherein the matching record that includes the destination address information and the corresponding application identity is counted as the update information, and the result of feature recognition is counted as the incremental information.

4. The data stream redirecting method according to claim 2, wherein the result of feature recognition comprises:
the destination address information of the data stream, and an application identity obtained by the service node through feature recognition that corresponds to the destination address information; and
destination address information of data streams to which application identities that are unable to be obtained through feature recognition.

5. The method according to claim 1, wherein redirecting the data stream based on the first global database comprises:
parsing out destination address information from the data stream; and
determining whether the destination address information exists in the first global database, if the destination address information exists in the first global database, acquiring an application identity corresponding to the destination address information, and redirecting the data stream based on a preset routing strategy corresponding to the application identity, and if the destination address information does not exist in the first global database, performing feature recognition on the data stream, and redirecting the data stream based on a recognition result.

6. The data stream redirecting method according to claim 1, wherein the destination address information includes any one or more of destination IP addresses, destination port addresses, and transport layer protocols.

7. A data stream redirecting method, applicable to a central node, comprising:
receiving (S301) variance information of a first global database respectively uploaded by at least one service node, wherein the first global database includes multiple pieces of destination address information and application identities corresponding to the multiple pieces of destination address information, and the variance information of the first global database is determined by the at least one service node based on destination address information of data streams that traverse the service node within a first preset period and application identities corresponding to the destination address information, wherein the variance information includes update information and incremental information, wherein the update information includes a matching record that includes the destination address information and a corresponding application identity, and the incremental information includes a result of feature recognition;
processing (S302) the variance information uploaded by each service node, to obtain total variance information;
based on the total variance information, updating (S303) the first global database to obtain a second global database; and
providing the second global database to the at least one service node to redirect data streams.

8. The data stream redirecting method according to claim 7, wherein the result of feature recognition includes:
destination address information that is obtained by each of the at least one service node through a feature recognition within a first preset period and that is not included in the first global database, and
application identities corresponding to the destination address information, and processing the variance information uploaded by each service node includes:
performing a conflict resolution process on the incremental information uploaded by each service node.

9. The data stream redirecting method according to claim 8, wherein the result of feature recognition further includes destination address information of data streams received by the service node within the first preset period that is not included in the first global database, and destination address information of application identities that are unable to be obtained through the feature recognition; and
the processing the variance information uploaded by each service node includes:
querying and recording, by the central node, application identities corresponding to the destination address information.

10. The data stream redirecting method according to claim 8 or 9, wherein the based on the total variance information, updating the first global database to obtain a second global database, includes:
adding a conflict processing result and/or a recording result obtained through querying to the first global database.

11. The data stream redirecting method according to claim 7, wherein the update information further includes destination address information included in the first global database that is matched successfully by a service node within a first preset period, and corresponding matching time, each piece of destination address information in the first global database is configured with a time-out value; and
processing the variance information uploaded by each service node further includes:
organizing the update information uploaded by each service node, and acquiring latest matching time of each piece of destination address information.

12. The data stream redirecting method according to claim 11, wherein the based on the total variance information, updating the first global database to obtain a second global database, includes:
based on a time-out value of the destination address information in the first global database and the update information obtained through processing, updating the first global database; and
under situations in which a preset condition of a time-out process is satisfied, deleting records of time-out destination address information and corresponding application identities, to obtain the second global database.

13. A server (50), comprising:
at least one processor (501); and
a memory (502) in communication connection with the at least one processor;
wherein the memory stores instructions executable by the at least one processor, and the instructions are executed by the at least one processor, such that the at least one processor executes a data stream redirecting method according to any one of claims 1-6.

14. A server (60), comprising:
at least one processor (601); and
a memory (602) in communication connection with the at least one processor;
wherein the memory stores instructions executable by the at least one processor, and the instructions are executed by the at least one processor, such that the at least one processor executes a data stream redirecting method according to any one of claims 7-12.

15. A data stream redirecting system, comprising a central node (10) and at least one service node (20);
the service node (20) is configured to execute a data stream redirecting method according to any one of claims 1∼6; and
the central node (10) is configured to execute a data stream redirecting method according to any one of claims 7-12.

## Patentansprüche

1. Eine Datenstromumleitungsmethode, die mindestens auf einen Service-Knoten zur Anwendung kommt, eingeschlossen eine Datenstrom-Umleitung (S101) basierend auf einer ersten globalen Datenbank, wobei die erste globale Datenbank mindestens eine der Zieladresseninformationen und Anwendungsidentitäten entsprechend der mindestens einen Zieladresseninformation einschliesst;
Basierend auf der Zieladresseninformation von Datenströmen, die innerhalb eines eresten voreingestellten Zeitraumes durch en Service-Knoten fliessen, und Anwendungsidentitäten entsprechend der Zieladresseninformation, Feststellung (S102) einer Abweichungsinformation der ersten globalen Datenbank, wobei die Abweichungsinformation der ersten globalen Datenbank aktualisierte und inkrementelle Information einschliesst, wobei die aktualisierte Information einen übereinstimmenden Datensatz einschliesst, der die Zieladresseninformation und die entsprechende Anwendungsidentität umfasst, und die inkrementelle Information ein Ergebnis der Funktions-Erkennung einschliesst;
Hochladen (S103) der Abweichungsinformation in einen zentralen Knoten, so dass der zentrale Knoten die erste globale Datenbank basierend auf der Abweichungsinformation aktualisiert, die durch den mindestens einen Service-Knoten hochgeladen wurde, zwecks Erzeugung einer zweiten globalen Datenbank; und
Erfassung der zweiten globalen Datenbank aus dem zentralen Knoten und basierend auf der zweiten globalen Datenbank Umleitung des Datenstroms.

2. Die Datenstromumleitungsmethode gemäss Anspruch 1, bei der basierend auf der Zieladresseninformation des innerhalb des ersten eingestellten Zeitraumes durchlaufenden Datenstroms und der Anwendungsidentitäten entsprechend der Zieladresseninformation die Feststellung der Abweichungsinformation der ersten globalen Datenbank Folgendes umfasst:
Feststellung, ob die Zieladresseninformation des Datenstroms in der ersten globalen Datenbank existiert;
wenn die Zieladresseninformation des Datenstroms in der ersten globalen Datenbank existiert, Erfassung eines übereinstimmenden Datensatzes, der die Zieladresseninformation und die entsprechenden Anwendungsidentität enthält; und
wenn die Zieladresseninformation des Datenstroms nicht in der ersten globalen Datenbank existiert, Ausführung durch den Service-Knoten einer Funktionserkennung im Datenstrom und Erfassung durch den Service-Knoten des Ergebnisses der Funktionserkennung.

3. Die Datenstromumleitungsmethode gemäss Anspruch 2, bei der der übereinstimmende Datensatz, der die Zieladresseninformation und die entsprechende Anwendungsidentität enthält, als Aktualisierungsinformation betrachtet wird, und das Ergebnis der Funktionserkennung als inkrementelle Information betrachtet wird.

4. Die Datenstromumleitungsmethode gemäss Anspruch 2, bei der das Ergebnis der Funktionserkennung Folgendes umfasst:
die Zieladresseninformation des Datenstroms, und eine Anwendungsidentität, die durch den Service-Knoten über die Funktionserkennung erfasst wurde, die der Zieladresseninformation entspricht; und
Zieladresseninformation der den Anwendungsidentitäten entsprechenden Datenströme, die nicht über die Funktionserkennung erhalten werden können.

5. Die Methode gemäss Anspruch 1, bei der die Umleitung des Datenstroms basierend auf der ersten globalen Datenbank Folgendes umfasst:
Parsing der Zieladresseninformation aus dem Datenstrom; und
Festellung, ob die Zieladresseninformation in der ersten globalen Datenbank existiert, wenn die Zieladresseninformation in der ersten globalen Datenbank existiert, Erhalt einer der Zieladresseninformation entsprechenden Anwendungsidentität und Umleitung des Datenstroms basierend auf einer voreingestellten Routingstrategie, die der Anwendungsidentität entspricht, und wenn die Zieladresseninformation nicht in der ersten globalen Datenbank existiert, Durchführung einer Funktionserkennung im Datenstrom und Umleitung des Datenstroms basierend auf dem Erkennungsergebnis.

6. Die Datenstromumleitungsmethode gemäss Anspruch 1, bei der die Zieladresseninformation irgendeine oder mehrere der Bestimmungs-IP-Adressen, Bestimmungsportadressen und Transport-Layer-Protokolle einschliesst.

7. Eine auf einen zentralen Knoten anwendbare Datenstromumleitungsmethode umfassend:
Empfang (S301) von Abweichungsinformation einer ersten globalen Datenbank jeweils hochgeladen durch mindestens einen Service-Knoten, wobei die erste globale Datenbank vielzählige Zieladresseninformationen und den vielzähligen Zieladresseninformationen entsprechende Anwendungsidentitäten einschliesst, und die Abweichungsinformation der ersten globalen Datenbank durch mindestens einen Service-Knoten basierend auf Zieladresseninformation von Datenströmen, die innerhalb eines ersten voreingestellten Zeitraumes durch den Service-Knoten fliessen, und die der Zieladresseninformation entsprechenden Anwendungsidentitäten bestimmt werden, wobei die Aktualisierungsinformation einen übereinstimmenden Datensatz einschliesst, der die Zieladresseninformation und eine entsprechende Anwendungsidentität umfasst, und die inkrementelle Information ein Ergebnis der Funktionsinformation einschliesst;
Verarbeitung (S302) der von jedem Service-Knoten hochgeladenen Abweichungsinformation zwecks Erhalt einer Gesamtabweichungsinformation;
Aktualisierung (S303) der ersten globalen Datenbank basierend auf der Gesamtabweichnungsinformation, um eine zweite globale Datenbank zu erhalten; und
Übermittlung der zweiten globalen Datenbank an den mindestens einen Service-Knoten zwecks Umleitung des Datenstroms.

8. Die Datenstromumleitungsmethode gemäss Anspruch 7, bei der das Ergebnis der Funktionserkennung Folgendes einschliesst:
Zieladresseninformation, die von mindestens einem der Service-Knoten durch die Funktionserkennung innerhalb eines ersten festgesetzten Zeitraumes übermittelt wurde und nicht in der ersten globalen Datenbank enthalten ist, und
der Zieladresseninformation entsprechende Anwendungsidentitäten und Verarbeitung der durch jeden Service-Knoten hochgeladenen Abweichungsinformation schliessen Folgendes ein:
Ausführung eines Konfliktlösungsprozesses an der durch jeden Service-Knoten hochgeladenen inkrementellen Information.

9. Die Datenstromumleitungsmethode gemäss Anspruch 8, bei der das Ergebnis der Funktionserkennung weiter Zieladresseninformation des durch den Service-Knoten empfangenen Datenstroms innerhalb des ersten festgesetzten Zeitraumes einschliesst, was nicht in der ersten globalen Datenbank eingeschlossen ist, und Zieladresseninformation von Anwendungsidentitäten, die durch die Funktionserkennung erhalten werden können; und
die Verarbeitung der durch jeden Service-Knoten hochgeladenen Abweichungsinformation schliesst Folgendes ein;
Abfrage und Aufzeichnung durch den zentralen Knoten der der Zieladresseninformation entsprechenden Anwendungsidentitäten.

10. Die Datenstromumleitungsmethode gemäss Anspruch 8 oder 9, bei der, basierend auf der Gesamtabweichungsinformation, die Aktualisierung der ersten globalen Datenbank zum Erhalt einer zweiten globalen Datenbank Folgendes einschliesst:
Hinzufügen zur ersten globqalen Datenbank eines Konfliktprozessergebnisses und /oder Aufzeichnung des durch Abfrage erhaltenen Ergebnisses.

11. Die Datenstromumleitungsmethode gemäss Anspruch 7, bei der die Aktualisierungsinformation ausserdem Folgendes umfasst: Die in der ersten globalen Datenbank eingeschlossene Zieladresseninformation, was erfolgreich durch einen Service-Knoten innerhalb eines ersten eingestellten Zeitraumes und einer entsprechenden Zeit für die Anpassung abgestimmt wurde, Konfiguration mit einem Zeitlimitwert jeder Zieladresseninformation in der ersten globalen Datenbank, und
die Verarbeitung der Abweichungsinformation, die durch jeden Service-Knoten hochgeladen wurde, schliesst ausserdem Folgendes ein:
Organisierung der durch jeden Service-Knoten hochgeladenen Aktualisierungsinformation und Erhalt der letzten Anpassungszeit von jeder Zieladresseninformation.

12. Die Datenstromumleitungsmethode gemäss Anspruch 11, bei der basierend auf der gesamten Abweichungsinformation die Aktualisierung der ersten globalen Datenbank zwecks Erhalt einer zweiten globalen Datenbank Folgendes einschliesst:
Basierend auf dem Zeitlimitwertwert der Zieladresseninformation in der ersten globalen Datenbank und der Aktualisierungsinformation, die durch die Verarbeitung erhalten wurde, Aktualisierung der ersten globalen Datenbank, und
in Situationen, in denen eine voreingestellte Bedingung eines Zeitlimitprozesses erfüllt ist, Löschen der Aufzeichnungen der Zeitlimitzieladresseninformation und der entsprechenden Anwendungsidentitäten, zwecks Erhalt der zweiten globalen Datenbank.

13. Ein Server (50), der Folgendes umfasst:
Mindestens einen Prozessor (501) und einen Speicher (502) in Kommunikationsverbindung mit mindestens dem einen Prozessor, wobei der Speicher Anweisungen speichert, die durch mindestens den einen Prozessor ausführbar sind,
und die Anweisungen durch mindestens den einen Prozessor ausgeführt werden, so dass der mindestens eine Prozessor eine Datenstromumleitungsmethode gemäss irgendeinem der Ansprüche 1-6 ausführt.

14. Ein Server (60), der Folgendes umfasst:
Mindestens einen Prozessor (601); und
einen Speicher (602) in Kommunikationsverbindung mit mindestens dem einen Prozessor,
wobei der Speicher Anweisungen speichert, die durch mindestens den einen Prozessor ausführbar sind, und die Anweisungen durch mindestens den einen Prozessor ausgeführt werden, so dass der mindestens eine Prozessor eine Datenstromumleitungsmethode gemäss irgendeinem der Ansprüche 7-12 ausführt.

15. Ein Datenstromumleitungssystem mit einem zentralen Knoten (10) und mindestens einem Service-Knoten (20);
Wobei der Service-Knoten (20) so konfiguriert ist, dass er eine Datenstromumleitungsmethode gemäss irgendeinem der Ansprüche 1-6 ausführt; und der zentrale Knoten (10) so konfiguriert ist, dass er eine Datenstromumleitungsmethode gemäss irgendeinem der Ansprüche 7-12 ausführt.

## Revendications

1. Un procédé de redirection de flux de données, applicable à un minimum d'un nœud de services, comprenant les pas suivants:
rediriger (S101) les flux de données à partir d'une première base de données globale, où la première base de données globale comprend au moins un élément d'information d'adresse de destination et des identifiants d'application, correspondant à au moins un élément d'information d'adresse de destination ;
déterminer (S102), en fonction de l'information d'adresse de destination des flux de données, qui traversent le nœud de services au cours d'une période prédéfinie, et des identifiants d'application correspondant à l'information d'adresse de destination, l'information de variance de la première base de données globale, où l'information de variance de la première base de données globale comprend l'information mise à jour et l'information incrémentielle; où l'information mise à jour comprend un enregistrement apparié qui inclut l'information d'adresse de destination et l'identifié d'application correspondant; et l'information incrémentielle inclut le résultat d'une reconnaissance de fonctions;
télécharger (S103) l'information de variance sur le nœud central, de telle manière que le nœud central met à jour la première base de données à partir de l'information de variance téléchargée par au moins un nœud de services, pour générer une deuxième base de données globale; et
obtenir la deuxième base de données globale du nœud central et, à partir de la deuxième base de données globale, rediriger les flux de données.

2. Le procédé de redirection de flux de données conformément à la revendication 1, où, à partir de l'information d'adresse de destination des flux de données qui traversent au cours de la première période prédéfinie et les identifiants d'application correspondant à l'information d'adresse de destination, la détermination de l'information de variance de la première base de données globale comprend les pas suivants:
déterminer si l'information d'adresse de destination d'un flux de donnés existe dans la première base de données;
si l'information d'adresse de destination du flux de données existe dans la première base de données, enregistrer un enregistrement apparié qui comprend l'information d'adresse de destination et l'identifiant d'application correspondant; et
si l'information d'adresse de destination du flux de données n'existe pas dans la première base de données globale, exécuter, par le nœud de services, la reconnaissance de fonctions dans le flux de données et enregistrer par le nœud de services le résultat de la reconnaissance de fonctions.

3. Le procédé de redirection de flux de données conformément à la revendication 2, où l'enregistrement apparié, qui contient l'information d'adresse de destination et l'identifiant d'application correspondant, est considéré comme l'information mise à jour, et le résultat de la reconnaissance de fonctions est considérée comme l'information incrémentielle.

4. Le procédé de redirection de flux de données conformément à la revendication 2, où le résultat de la reconnaissance de fonctions comprend:
l'information d'adresse de destination du flux de données et un identifiant d'application obtenu par le nœud de services au moyen de la reconnaissance de fonctions qui correspond à l'information d'adresse de destination; et
l'information d'adresse de destination du flux de données qui correspond aux identifiants d'application qui n'ont pas pu être obtenus à travers la reconnaissance de fonctions.

5. Le procédé conformément à la revendication 1, où la redirection du flux de données partir de la première base de données globale comprend les pas suivants :
distinguer l'information d'adresse de destination du flux de données; et
déterminer si l'information d'adresse de destination existe dans la première base de données globale; si l'information d'adresse de destination existe dans la première base de données globale, obtenir un identifiant d'application correspondant à l'information d'adresse de destination, et rediriger le flux de données conformément à une stratégie d'acheminement prédéfinie correspondant à l'identifiant d'application; et, si l'information d'adresse de destination n'existe pas dans la première base de données globale, exécuter la reconnaissance de fonctions sur le flux de données, et rediriger le flux de données à partir du résultat de la reconnaissance.

6. Le procédé de redirection de flux de données conformément à la revendication 1, où l'information d'adresse de destination contient une ou plusieurs adresses IP, adresses du port de destination et protocoles de la couche transport.

7. Un procédé de redirection de flux de données, applicable à un nœud central, comprenant les pas suivants:
recevoir (S301) l'information de variance d'une première base de données globale, respectivement, téléchargée par au moins un nœud de services, où la première base de données globale contient plusieurs éléments de l'information d'adresse de destination et des identifiants d'application, correspondant aux éléments de l'information d'adresse de destination; et l'information de variance de la première base de données globale est déterminée par au moins un nœud de services au cours d'une première période prédéfinie et des identifiants d'application, correspondant à l'information d'adresse de destination, où l'information de variance comprend l'information de mise à jour et l'information incrémentielle, où l'information de mise à jour comprend un enregistrement apparié qui contient l'information d'adresse de destination et l'identifiant d'application correspondant; et l'information incrémentielle comprend le résultat d'une reconnaissance de fonctions;
traiter (S302) l'information de variance téléchargée par chaque nœud de services pour obtenir l'information de variance totale;
mettre à jour (S303), à partir de l'information de variance totale, la première base de données globale pour obtenir une deuxième base de données globale; et
fournir la deuxième base de données globale, au moins, à un nœud de services, pour rediriger les flux de données.

8. Le procédé de redirection de flux de données conformément à la revendication 7, où le résultat de la reconnaissance de fonctions comprend:
l'information d'adresse de destination qui est obtenue par, au moins, chaque nœud de services au moyen de la reconnaissance de fonctions au cours d'une première période prédéfinie et qui n'est pas comprise dans la première base de données globale; et
les identifiants d'application correspondant à l'information d'adresse de destination; et le traitement de l'information de variance téléchargée par chaque nœud de services comprend:
l'exécution d'un processus de résolution de conflits sur l'information incrémentielle téléchargée par chaque nœud de services.

9. Le procédé de redirection de flux de données conformément à la revendication 8, où le résultat de la reconnaissance de fonctions comprend en outre l'information d'adresse de destination des flux de données reçue par le nœud de services au cours de la première période préconfigurée qui n'est pas comprise dans la première base de données globale ; et l'information d'adresse de destination des identifiants d'application qui ne peuvent pas être obtenus à travers de la reconnaissance de fonctions; et
le traitement de l'information de variance téléchargée par chaque nœud de services comprend:
l'interrogation et l'enregistrement par le nœud central des identifiants d'application correspondant à l'information d'adresse de destination.

10. Le procédé de redirection de flux de données conformément à la revendication 8 ou 9, où la mise à jour, en fonction de l'information de variance totale, de la première base de données globale pour obtenir une deuxième base de données globale, comprend:
l'addition du résultat du traitement des conflits et/ou l'enregistrement du résultat obtenu au travers de l'interrogation de la première base de données globale.

11. Le procédé de redirection de flux de données conformément à la revendication 7, où l'information de mise à jour comprend en outre l'information d'adresse de destination incluse dans la première base de données globale qui est appariée avec succès par un nœud de services au cours d'une première période prédéfinie et du temps d'appariement correspondant; chaque élément de l'information d'adresse de destination dans la première base de données globale est configuré avec une valeur de temporisation0; et
le traitement de l'information de variance téléchargée par le nœud de services comprend en outre:
l'organisation de l'information mise à jour et téléchargée par chaque nœud de service et l'obtention du dernier temps d'appariement de chaque élément de l'information d'adresse de destination.

12. Le procédé de redirection de flux de données conformément à la revendication 11, où la mise à jour, en fonction de l'information de variance totale, de la première base de données globale pour obtenir une deuxième base de données globale, comprend:
à partir d'une valeur de temporisation de l'information d'adresse de destination dans la première base de données globale et l'information de mise à jour obtenue au travers du traitement, mettre à jour la première base de données globale; et
dans des situations où une condition prédéfinie d'un processus de temporisation est remplie, éliminer des enregistrements de l'information d'adresse de destination de temporisation et les identifiants d'application correspondants pour obtenir une deuxième base de données globale.

13. Un serveur (50) comprenant:
au moins un processeur (501); et
une mémoire (502) en connexion de communication avec au moins un processeur;
où la mémoire stocke les instructions exécutables par un processeur, au moins; et les instructions sont exécutées par un processeur, au moins, de telle manière qu'un processeur, au moins, exécute un procédé de redirection de flux de données conformément à l'une quelconque des revendications 1-6.

14. Un serveur (60) comprenant:
au moins un processeur (601) ; et
une mémoire (602) en connexion de communication avec au moins un processeur ;
où la mémoire stocke les instructions exécutables par un processeur, au moins; et les instructions sont exécutées par un processeur, au moins, de telle manière qu'un processeur, au moins, exécute un procédé de redirection de flux de données conformément à l'une quelconque des revendications 7-12.

15. Un système redirection de flux de données, comprenant un noud central (10) et au moins un nœud de services (20);
le nœud de services (20) est configuré pour exécuter un procédé de redirection de flux de données conformément à l'une quelconque des revendications 1-6
le nœud central (10) est configuré pour exécuter un procédé de redirection de flux de données conformément à l'une quelconque des revendications 7-12.
